(19) Europäisches Patentamt / European Patent Office / Office européen des brevets

(11) **EP 3 454 506 B1**

(12) **EUROPEAN PATENT SPECIFICATION**

(45) Date of publication and mention
of the grant of the patent:
**04.03.2020 Bulletin 2020/10**

(51) Int Cl.:
***H04L 12/24*** (2006.01)      ***H04L 12/26*** (2006.01)
***G06N 20/00*** (2019.01)

(21) Application number: **17189765.5**

(22) Date of filing: **07.09.2017**

(54) **METHOD AND DEVICE FOR MONITORING A TELECOMMUNICATION NETWORK**

VERFAHREN UND VORRICHTUNG ZUR ÜBERWACHUNG EINES
TELEKOMMUNIKATIONSNETZWERKS

PROCÉDÉ ET DISPOSITIF DE SURVEILLANCE D'UN RÉSEAU DE TÉLÉCOMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.03.2019 Bulletin 2019/11**

(73) Proprietor: **Nokia Solutions and Networks Oy
02610 Espoo (FI)**

(72) Inventor: **DUPUIS, Nicolas
6041 Gosselies (BE)**

(74) Representative: **Nokia EPO representatives
Nokia Technologies Oy
Karakaari 7
02610 Espoo (FI)**

(56) References cited:
**US-A1- 2014 310 396      US-B2- 9 152 925**

- **KARAN MITRA ET AL: "Proactive QoE
  Provisioning in Heterogeneous Access Networks
  using Hidden Markov Models and Reinforcement
  Learning", ARXIV.ORG, CORNELL UNIVERSITY
  LIBRARY, 201 OLIN LIBRARY CORNELL
  UNIVERSITY ITHACA, NY 14853, 25 December
  2016 (2016-12-25), XP080742916,**
- **NITESH V CHAWLA ET AL: "SMOTE: Synthetic
  Minority Over-sampling Technique", JOURNAL
  OF ARTIFICIAL INTELLIGENCE RESEARCH, vol.
  16, 31 January 2002 (2002-01-31), pages 321-357,
  XP055096179,**

**Description**

FIELD OF THE INVENTION

The present invention relates to the field of telecommunication. In particular, the present invention relates to a method and a device for monitoring a telecommunication network.

BACKGROUND

In a DSL network, an access node provides DSL operational parameters that may be used for estimating the quality of experience of DSL subscribers. Estimating the quality of experience from DSL operational parameters has been under study, as this usually drive the improvement actions and/or trigger alarms or diagnosis. Ultimately, predicting accurately that a subscriber will complain within a very short period if no action is taken rapidly is the holy grail in network troubleshooting as this may enable the pro-active maintenance approach, i.e. acting before customer starts to complain. Being able to be accurate in a context where different DSL technologies are deployed, where customers are not subscribing for the same service and where they are not requesting the same content is moreover quite challenging.

A known approach for monitoring a DSL network relies on machine learning techniques in order to learn operational data degradation signatures from the presence of end-user complains. However, the reliability of the trained model may be sensitive to the quality of the training data set. For example, in the context of DSL troubleshooting, it might be common to not trigger a complain, even if the service gets degraded in similar way than for complaining subscribers. Accordingly, the machine learning process may start learning irrelevant model, proposing an inconsistent mapping between symptoms and complains (e.g. "degradation signatures" get linked to "no reported issues") and may lead to make wrong conclusions if cares are not taken.

US 9 152 925 B2 describes the training and use of a machine learning model for prediction and root cause recommendations of service access quality of experience issues in communication networks.

US 2014/310396 A1 describes the training, selection and use of a classification model for encrypted network traffic.

KARAN MITRA ET AL, "Proactive QoE Provisionning in Heterogeneous Access Networks using Hidden Markov Models and Reinforcement Learning", describe a prediction of QoE based on Hidden Markov Models and Multi-Homed Mobility Management Protocol.

SUMMARY

It is thus an object of embodiments of the present invention to propose methods and devices for monitoring a telecommunication network, which do not show the inherent shortcomings of the prior art.

Accordingly, embodiments relate to a method according to claim 1.

Correlatively, embodiments relate to a monitoring device according to claim 10.

A training example may specify one or more features related to a speed of the telecommunication line and/or one or more features related to a stability of a telecommunication line.

The method may comprise receiving ticketing data specifying complaints received by a customer service associated with said telecommunication network, wherein the label of a training example specifies the presence and/or type of a complain.

In some embodiments, for a label specifying an absence of complain, the weight associated with a cluster is determined by:

- determining distances between the position of said cluster and an expected position, across dimensions of said features space,
- determining a maximum distance among said distances,
- determining said weight as a function of said maximum distance, the higher the maximum distance, the lower the weight.

In some embodiments, for a label specifying a complain related to a speed of a telecommunication line, the weight associated with a cluster is determined by:

- determining distances between the position of said cluster and an expected position, across dimensions of said features space associated with speed,
- determining a minimum distance among said distances,
- determining said weight as a function of said minimum distance, the higher the minimum distance, the lower the weight.

In some embodiments, for a label specifying a complain related to a stability of a telecommunication line, the weight associated with a cluster is determined by:

- determining distances between the position of said cluster and an expected position, across dimensions of said features space associated with stability,
- determining a minimum distance among said distances,
- determining said weight as a function of said minimum distance, the higher the minimum distance, the lower the weight.

The method may comprise determining a Quality of Experience of a telecommunication line and/or predicting that a user of a telecommunication line will complain, by using the trained machine learning model.

The method may comprise performing a corrective action for the telecommunication network in response to determining low QoE or predicting a user complain.

Embodiments also relate to a computer program comprising instructions for performing the method mentioned before when said instructions are executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

> Figure 1 is a block diagram of a telecommunication network,
> Figures 2 and 3 are flowcharts of methods executed by a monitoring device of the telecommunication network of Figure 1,
> Figure 4 is a graph illustrating a training dataset used by the monitoring device, and
> Figure 5 is structural view of the monitoring device.

DESCRIPTION OF EMBODIMENTS

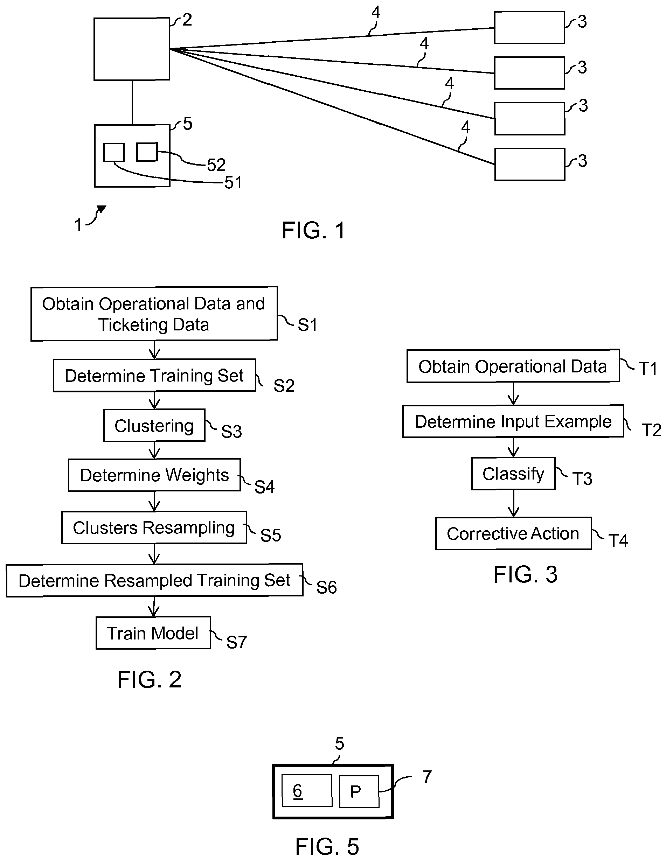

**Figure 1** is a block diagram of a telecommunication network 1. The telecommunication network 1 comprises one or more access nodes 2 (only one of which is shown), a plurality of client devices 3, a plurality of telecommunication lines 4 and a monitoring device 5.

An access node 2 comprises a plurality of ports to which respective client devices 3 are connected through a telecommunication line 4. An access node 2 and a client device 3 are configured for communication through the telecommunication line 4 using for example DSL technology, such as ADSL, VDSL2, G.FAST... An access node 2 is for example a DSLAM and a client device 3 is for example a CPE, a DSL modem...In another embodiment, the telecommunication line 4 is an optical line and an access node 2 and a client device 3 are configured for communication through the telecommunication line 4 using an optical communication protocol.

An access node 2 provides operational data describing the functioning of its ports (or in other words, of the connected telecommunication lines 4). The operational data specifies operational parameters, which may include at least one of:

- Actual Power (US/DS)
- Actual Noise Margin (US/DS)
- Actual Bitrate (US/DS)
- Attenuation (US/DS)
- Electrical Length
- Code violation (US/DS)
- Errored seconds (US/DS)

- Severely errored seconds (US/DS)
- Modem failed initializations
- Modem resynchronization
- Showtime duration
- Actual Impulse Noise protection (US/DS)
- Actual Delay (US/DS)

Usually, these operational parameters are available for each client device 3 (each port or telecommunication line 4) at regular time interval (e.g. daily, or every 15-min).

The telecommunication network 1 is operated by a network operator, which provides a customer service. A customer may contact the customer service and register a complain. For example, a customer may complain about dropped connection or low speed. The network operator stores ticketing data specifying user complains associated with respective ports. The ticketing data may specify for example:

- An identifier associated with the complaining customer, the corresponding client device 3 and telecommunication line 4,
- A time stamp of the complain
- A type of complain (low speed, dropped connection...)

The monitoring device 5 comprises a model training module 51 and a quality monitoring module 52.

The model training module 51 is configured for training a machine-learning model in function of the operational data and the ticketing data, which aims at estimating and/or predicting the customer quality of experience and the related degradation complains. The model training module 51 is configured to learn autonomously the relationships between patterns founds in relevant operational data and various subscriber complains.

The quality monitoring module 52 uses the model trained by the model training module 51 for estimating and/or predicting the Quality of Experience (QoE) of subscribers, and/or for predicting user complains, in function of the operational data.

The functioning of the monitoring device 5 is described hereafter in more details with reference to Figure 2 to 5.

**Figure 2** is a flowchart of a method for training a machine-learning model of the telecommunication network 1, executed by the monitoring device 5.

The monitoring device 5 obtains operational data and ticketing data associated with the telecommunication network 1 (Step S1). For example, the monitoring device 5 obtains operational data from the one or more access nodes 2 and/or from the client devices 3, and obtains ticketing data from the customer service. As explain before, the operational data specify operational parameters related to the functioning of the telecommunication lines 4 and the ticketing data specify the presence and/or type of complains received by the customer service.

Then, the monitoring device 5 determines a training set as a function of the operational data and ticketing data (step S2). The training set includes a plurality of training examples. A training example is associated with one telecommunication line 4 and specifies a plurality of features and a label.

The features of a training example are representative of the functioning of the telecommunication line 4 at a given time and/or for a given period. For example, a feature may specify one of the operational parameters of the operation data. In another example, a feature may be determined as a function of one or more operational parameters.

The features may include one or more features related to the speed of the telecommunication line 4, for example: an aggregate of the actual bitrate (upload) over a time period, an aggregate of the actual bitrate (download) over a time period, a bitrate budget...

The features may include one or more features related to the stability of the telecommunication line 4, for example: A mean time between errors (MTBR), a mean time between resynchronization (MTBE)...

The label is representative of the presence and type of a complain. For example, the label may specify one of the following three classes: No ticket, Low speed ticket, Drop connection ticket. The identifier and time stamp specified by the ticketing data allows matching the operational data and ticketing data to associate a label with the corresponding features of a training example.

Determining the training set may also comprise applying techniques such as scaling the input data (eg in the range [-1, 1]), normalization, harmonizing the amount of training example in each category...

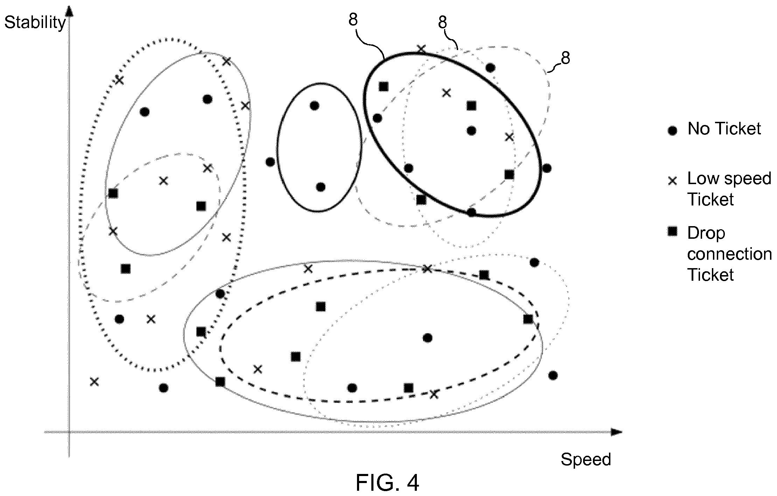

**Figure 4** is a graph of a simplified visualization of the training set. More specifically, this 2D graph shows only two features: The horizontal axis corresponds to a feature related to the speed of a telecommunication line 4, and the vertical axis corresponds to a feature related to the stability of a telecommunication line 4. The training examples are shown as squares, circles or crosses, depending on the label. In a practical example, there would be more than two features related to speed, stability and/or other technical aspects of the telecommunications lines 4. The training examples are in a multi-dimensional feature space with more than two dimensions.

Then, the monitoring device 5 clusters the training examples associated with the respective labels (step S3). In other words, the monitoring device 5 performs per-category clustering. For a given labelled category, a cluster identification algorithm is trained on the scaled input features. A suitable example of clustering technique is a Gaussian Mixture Model (GMM). This will identify and isolate different patterns present in the data as well as associate each training example to its corresponding cluster. Figure 4 also shows the determination of such clusters 8. More specifically, in this simplified view, clusters 8 for the respective labels are illustrated by 2D contours. The different line types correspond to clusters 8 for respective labels. In a generic multi-dimensional example, the clusters would have multi-dimensional shapes.

Then, the monitoring device 5 determines weights associated with the respective clusters 8 (Step S4). The weight associated with a given cluster is representative of the relevance of the training examples of the cluster, considering the associated label and a position of the cluster in the feature space. The position of a cluster can be represented by the centroid of the cluster. Accordingly, the weight associated with a given cluster may be determined as a function of the position of the cluster and of an expected position corresponding to the label of the cluster.

Indeed, domain knowledge allows to advise on the respective relevance of each cluster with respect to the estimation of the quality of experience. More specifically, according the position of a cluster, the training examples may be relevant or not, according to a general domain knowledge. For example, training examples labelled as "Low Speed ticket" or "Drop connection ticket" but belonging to a cluster located in a region not presenting any symptoms of degradation should be taken with more care than associated to a cluster located in a region exhibiting some symptoms of damage. In that sense, depending on the semantics of the different labelled classes, relevant dimensions get selected and orientated by domain knowledge. Thanks to such orientation, the relevance of each cluster can be estimated, thanks to their distance with respect to the expected region in such an orientated feature space. For example, thanks to such orientation of the feature space, some distances can be derived to estimate if the identified cluster are more or less relevant, depending on their distance compared to the ideal expected location from a common recognize domain knowledge, for each labelled class.

For clusters labelled as "No ticket", it is expected that the training examples should specify high speed and high stability. Other expected value may also be defined for other features not related to speed or stability. The closer a cluster is from the expected position defined by the expected values, the higher weight it gets. In an example implementation, an expected value $EV_i$ is specified for respective features $f_i$, and a distance $d_i$ is determined as:

$$d_i = |EV_i - c_i|,$$

for respective features $f_i$
where $c_i$ is the value of feature $f_i$ for the cluster's position, and the expected values $EV_i$ correspond to high speed(s), high stability....

Since it is expected that a "No ticket" cluster should be close to the expected position defined by the expected value EVi along all dimensions (thus for all fea-

tures $f_i$), a maximum distance $d_{max}$ is determined:

$$d_{max} = max(d_i)$$

Then, the weight $w_c$ of the cluster is determined: the higher the maximum distance $d_{max}$, the lower the weight. For example:

$$w_c = (1-d_{max})^p$$

where p is a non-linear factor.

For clusters labelled as "Low speed ticket", it is expected that the training examples should specify, for at least one of the features $f_i$ related to speed, a low value. In an example implementation, an expected position defined by expected value $EV'_i$ is specified for respective features $f_i$ related to speed, and a distance $d''_i$ is determined as:

$$d'_i = |EV'_i − c'_i|,$$

for respective features $f_i$ related to speed
where $c'_i$ is the value of feature $f_i$ for the cluster's position, and the expected values $EV'_i$ correspond to low speed(s).

Since it is expected that a "Low speed ticket" cluster should be close to the position defined by the expected value EVi along at least one dimension, but not necessarily for all "speedp" features, a minimum distance $d'_{min}$ is determined:

$$d'_{min} = min(d'_i)$$

Then, the weight $w'_c$ of the cluster is determined: the higher the minimum distance $d'_{min}$, the lower the weight. For example:

$$w'_c = (1-d'_{min})^{p'}$$

where p' is a non-linear factor.

For clusters labelled as "Drop connection ticket", it is expected that the training examples should specify, for at least one of the features $f_i$ related to stability, a low value. In an example implementation, an expected position defined by expected value $EV''_i$ is specified for respective features $f_i$ related to stability, and a distance $d''_i$ is determined as:

$$d''_i = |EV''_i − c''_i|,$$

for respective features $f_i$ related to stability
where $c''_i$ is the value of feature $f_i$ for the cluster's position, and the expected values $EV''_i$ correspond to low stabilities.

Since it is expected that a "Drop connection ticket" cluster should be close to the position defined by the expected value $EV''_i$ along at least one dimension, but not necessarily for all "stability" features, a minimum distance $d''_{min}$ is determined:

$$d''_{min} = min(d''_i)$$

Then, the weight $w''_c$ of the cluster is determined: the higher the minimum distance $d''_{min}$, the lower the weight. For example:

$$w'_c = (1-d'_{min})^{p''}$$

where p" is a non-linear factor.

Then, the monitoring device 5 resamples the clusters based on the respective weights (step S5). For the respective clusters, the population of a cluster gets resampled based on its weight, to balance the importance of what is known as potentially relevant pattern compared to what is irrelevant. More specifically, resampling a cluster comprises selecting a subset of training examples, wherein the proportion of selected training example is specified by the weight. The selection is for example random. Accordingly, for a cluster which is regarded as relevant and has therefore a high weight, the resampled cluster comprises a large proportion of the training examples. In contrast, for a cluster which is regarded as less relevant and has therefore a lower weight, the resampled cluster comprises a smaller proportion of the training examples.

Then, the monitoring device 5 determines a resampled training set (step S6). The resampled training set comprises the resampled clusters for the respective labels.

Finally, the monitoring device 5 trains a machine learning model of the telecommunication network 1, based on the resampled training set (Step S7). The machine learning model may have one of known model types, such as decision trees, Random Forest, Bayesian network, logistic classification, neural networks, SVM... In one embodiment, the machine learning model is a 2-hidden-layers perceptron (feed forward neural network). The result is a trained machine learning model configured for determining or predicting a label as a function of input features representative of operational data related to the functioning of a telecommunication line.

**Figure 3** is a flowchart of a method for monitoring a telecommunication line 4 (or equivalently a port), executed by the monitoring device 5.

The monitoring device 5 obtains operational data specifying the functioning of the telecommunication line 4 (Step T1). Then, the monitoring device 5 determines an input example as a function of the operational data (step T2), for example by applying the same feature scaling, etc., as in step S2. The input example specifies the current (or recent) technical functioning of the telecommunication line 4.

Then, the monitoring device 5 classifies the input example, by using the trained machine learning model determined at step S7 (Step T3). Classifying the input example comprise determining a label as a function of the input example. The label represents a determination or prediction of the Quality of Experience (QoE) of the telecommunication lines: Determining a "No ticket" label correspond to determining or predicting that the functioning of the telecommunication line 4 is satisfactory and/or that the corresponding customer will not contact the customer service. In contrast, determining a "Low speed ticket" or "Low stability ticket" label correspond to determining or predicting that the functioning of the telecommunication line 4 is not satisfactory and/or that the corresponding customer will contact the customer service if no corrective action is taken.

Accordingly, in some embodiment, in response to determining low QoE or predicting a user complain, the monitoring device 5 may take corrective actions (step T4), which may include for example at least one of:

- configuring the access node 2 with updated configuration parameters for the DSL port (e.g. updated minimum or maximum bitrate, noise margin...)
- executing troubleshooting process to identify a fault on the telecommunication line 4 in function of the DSL operational parameters
- asking a technician to examine the telecommunication line 4 on the field

The monitoring device 5 may perform the method of Figure 3 for respective telecommunication lines 4, for example in parallel or sequentially. Training the machine learning model as described with reference to Figure 2 and monitoring telecommunication lines 4 as described with reference to Figure 3 form part of a method for monitoring the telecommunication network 1, executed by the monitoring device 5. More specifically, the model training module 51 may execute the method of Figure 2 and the quality monitoring module may execute the method of Figure 3.

The monitoring device 5 uses a machine learning model to monitor the telecommunication network 1. Accordingly, detecting low QoE and/or predicting user complaints may be performed automatically, thus improving reliability and efficiency.

Moreover, since the machine learning model has been trained based on a resampled training set, determined by per-category clustering of the initial training set and resampling the respective clusters based on their relevance determined by domain expert knowledge, the quality of the trained machine learning model is improved.

Comparative tests have shown that the precision of the monitoring performed by an implementation of the monitoring device 5 is higher than for other monitoring methods.

This is contrasting with the alternative option of filtering a training data set based on domain knowledge, by performing a hard selection of relevant training examples. In this case, the data would be compared to thresholds or follow a simple logic to get selected or filtered-out. However, besides the fact that advanced domain knowledge is required, such process suffers from strong limitations, especially in the context of a data set later-on used to learn a model or train a classifier. Indeed, comparing data to thresholds or performing some sanity check based on empirically established decision trees already separate and classify the data in two categories: the relevant and the non-relevant. As such, a hard limit is set. If such data set gets used for training a classifier, it will bias the results. Even more problematic, the rationale of using self-learned model in this context is questionable, as some classifications have been already performed empirically. In that context, the fitted model derived by the machine with simply reflect the discrimination performed by the thresholding process. Besides some technical consideration of not leveraging the potential of data science, such approach prevents to be adaptive to unexpected data behaviors/distributions, preventing to self-learn and adapt to unexpected network behaviours. As such, hidden/not known phenomenon, evolution, properties cannot be captured. In that sense, this approach does not offer the ability to adjust and learn from the network proper characteristics anymore (e.g. per technology pattern, content dependent phenomenon, end-user's reaction, etc).

This also contrast with the alternative option of filtering a training data set based on statistical methods. In that case, the selection would not make use at all of domain knowledge, but instead rely on statistical/automated techniques, ranging from statistical tests to clustering for instance, to isolate outliers. Such approach has the advantage of not requiring domain knowledge and therefore to not bias the classification model with biased data. However, the rationale of isolating relevant information from irrelevant one should be met. With such approach, except from the classical outlier detection capability or unexpected behavior detection, without embedding any domain knowledge, it hardly prevents to not keeping associating irrelevant information from a contextual perspective. In other words, data presenting apparently valid patterns but not relevant from a domain perspective cannot hardly be filtered-out.

**Figure 5** is a structural view of the monitoring device 5, which comprises a processor 6 and a memory 7. The memory 7 stores a computer program P which, when executed by the processor 6, causes the monitoring device 5 to execute the method described above with reference to Figures 3 and 4. The monitoring device 5 may be implemented based on distributed computing techniques. In particular, the model training module 51 and the quality monitoring module 52 may run on different hardware.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

Embodiments of the method can be performed by means of dedicated hardware and/or software or any combination of both.

While the principles of the invention have been described above in connection with specific embodiments, it is to be clearly understood that this description is made only by way of example and not as a limitation on the scope of the invention, which is defined in the appended claims.

## Claims

1. Method for monitoring a telecommunication network (1) comprising at least one access node (2), a plurality of client devices (3), and a plurality of telecommunication lines (4) connecting said at least one access node (2) to respective client devices (3), the method being executed by a monitoring device (5), the method comprising the following steps:

    - determining (S2) a training set associated with the telecommunication network (1), said training set including a plurality of training examples, a training example specifying:

        - features related to the functioning of a telecommunication line (4), and
        - a label,

    - for at least one of said label:

        - clustering (S3) the training examples associated with said label, thereby determining a plurality of clusters associated with said label,
        - determining (S4) weights associated with the respective clusters, wherein the weight associated with a cluster is determined as a function of a position of said cluster in a feature space and as a function of said label, and
        - resampling (S5) said clusters according to said weights, thereby determining resampled clusters,

    - determining (S6) a resampled training set according to said resampled clusters,
    - training (S7) a machine learning model according to said resampled training set, thereby determining a trained machine learning model configured for determining or predicting a label as a function of operational data related to the functioning of a telecommunication line.

2. Method according to claim 1, wherein a training example specifies one or more features related to a speed of the telecommunication line and/or one or more features related to a stability of a telecommunication line.

3. Method according to one of claims 1 to 2, comprising receiving (S1) ticketing data specifying complaints received by a customer service associated with said telecommunication network (1), wherein the label of a training example specifies the presence and/or type of a complain.

4. Method according to one of claims 1 to 3, wherein, for a label specifying an absence of complain, the weight associated with a cluster is determined by:

    - determining distances between the position of said cluster and an expected position, across dimensions of said features space,
    - determining a maximum distance among said distances,
    - determining said weight as a function of said maximum distance, the higher the maximum distance, the lower the weight.

**5.** Method according to one of claims 1 to 4, wherein, for a label specifying a complain related to a speed of a telecommunication line, the weight associated with a cluster is determined by:

- determining distances between the position of said cluster and an expected position, across dimensions of said features space associated with speed,
- determining a minimum distance among said distances,
- determining said weight as a function of said minimum distance, the higher the minimum distance, the lower the weight.

**6.** Method according to one of claims 1 to 5, wherein, for a label specifying a complain related to a stability of a telecommunication line, the weight associated with a cluster is determined by:

- determining distances between the position of said cluster and an expected position, across dimensions of said features space associated with stability,
- determining a minimum distance among said distances,
- determining said weight as a function of said minimum distance, the higher the minimum distance, the lower the weight.

**7.** Method according to one of claims 1 to 6, comprising determining (T3) a Quality of Experience of a telecommunication line and/or predicting that a user of a telecommunication line will complain, by using the trained machine learning model.

**8.** Method according to claim 7, comprising performing (T4) a corrective action for the telecommunication network (1) in response to determining low QoE or predicting a user complain.

**9.** Computer program (P) comprising instructions for performing the method of one of claims 1 to 8 when said instructions are executed by a computer.

**10.** Monitoring device (5) for monitoring a telecommunication network (1) comprising at least one access node (2), a plurality of client devices (3), and a plurality of telecommunication lines (4) connecting said at least one access node (2) to respective client devices (3), the monitoring device (5) comprising means (6, 7, P) configured for:

- determining (S2) a training set associated with the telecommunication network (1), said training set including a plurality of training examples, a training example specifying:

- features related to the functioning of a telecommunication line (4), and
- a label,

- for at least one of said label:

- clustering (S3) the training examples associated with said label, thereby determining a plurality of clusters associated with said label,
- determining (S4) weights associated with the respective clusters, wherein the weight associated with a cluster is determined as a function of a position of said cluster in a feature space and as a function of said label,
- resampling (S5) said clusters according to said weights, thereby determining resampled clusters,

- determining (S6) a resampled training set according to said resampled clusters,
- training (S7) a machine learning model according to said resampled training set, thereby determining a trained machine learning model configured for determining or predicting a label as a function of operational data related to the functioning of a telecommunication line.

**Patentansprüche**

**1.** Verfahren zum Überwachen eines Telekommunikationsnetzes (1), das wenigstens einen Zugangsknoten (2), mehrere Client-Vorrichtungen (3) und mehrere Telekommunikationsleitungen (4), die den wenigstens einen Zugangsknoten (2) mit jeweiligen Client-Vorrichtungen (3) verbinden, umfasst, wobei das Verfahren von einer Überwachungsvorrichtung (5) ausgeführt wird, wobei das Verfahren die folgenden Schritte umfasst:

- Bestimmen (S2) einer Trainingsmenge, die dem Telekommunikationsnetz (1) zugeordnet ist, wobei die Trainingsmenge mehrere Trainingsbeispiele beinhaltet, wobei ein Trainingsbeispiel angibt:

- Merkmale, die mit der Funktionsweise einer Telekommunikationsleitung (4) im Zusammenhang stehen, und
- ein Etikett,

- für wenigstens ein solches Etikett:

- Clustern (S3) der Trainingsbeispiele, die dem Etikett zugeordnet sind, dadurch Bestimmen mehrerer Cluster, die dem Etikett zugeordnet sind,

- Bestimmen (S4) von Gewichten, die den jeweiligen Clustern zugeordnet werden, wobei das einem Cluster zugeordnete Gewicht als eine Funktion einer Position des Clusters in einem Merkmalsraum und als eine Funktion des Etiketts bestimmt wird, und

- Neuberechnen (S5) der Cluster gemäß den Gewichten, dadurch Bestimmen neuberechneter Cluster,

- Bestimmen (S6) einer neuberechneten Trainingsmenge gemäß den neuberechneten Clustern,

- Trainieren (S7) eines Maschinenlernmodells gemäß der neuberechneten Trainingsmenge, dadurch Bestimmen eines trainierten Maschinenlernmodells, das dafür ausgelegt ist, ein Etikett in Abhängigkeit von Betriebsdaten zu bestimmen oder vorherzusagen, die mit der Funktionsweise einer Telekommunikationsleitung im Zusammenhang stehen.

2. Verfahren nach Anspruch 1, wobei ein Trainingsbeispiel ein oder mehrere Merkmale angibt, die mit einer Geschwindigkeit der Telekommunikationsleitung im Zusammenhang stehen, und/oder ein oder mehrere Merkmale, die mit einer Stabilität einer Telekommunikationsleitung im Zusammenhang stehen.

3. Verfahren nach einem der Ansprüche 1 bis 2, welches das Empfangen (S1) von Ticketdaten umfasst, die Beschwerden angeben, die durch einen dem Telekommunikationsnetz (1) zugeordneten Kundendienst empfangen wurden, wobei das Etikett eines Trainingsbeispiels das Vorhandensein und/oder den Typ einer Beschwerde angibt.

4. Verfahren nach einem der Ansprüche 1 bis 3, wobei für ein Etikett, welches ein Nichtvorliegen von Beschwerden angibt, das einem Cluster zugeordnete Gewicht bestimmt wird durch:

- Bestimmen von Abständen zwischen der Position des Clusters und einer erwarteten Position über Dimensionen des Merkmalsraumes,
- Bestimmen eines maximalen Abstands unter den Abständen,
- Bestimmen des Gewichts in Abhängigkeit von dem maximalen Abstand; je größer der maximale Abstand, desto kleiner das Gewicht.

5. Verfahren nach einem der Ansprüche 1 bis 4, wobei für ein Etikett, das eine Beschwerde angibt, die mit einer Geschwindigkeit einer Telekommunikationsleitung im Zusammenhang steht, das einem Cluster zugeordnete Gewicht bestimmt wird durch:

- Bestimmen von Abständen zwischen der Position des Clusters und einer erwarteten Position über Dimensionen des Merkmalsraumes, die der Geschwindigkeit zugeordnet sind,
- Bestimmen eines minimalen Abstands unter den Abständen,
- Bestimmen des Gewichts in Abhängigkeit von dem minimalen Abstand; je größer der minimale Abstand, desto kleiner das Gewicht.

6. Verfahren nach einem der Ansprüche 1 bis 5, wobei für ein Etikett, das eine Beschwerde angibt, die mit einer Stabilität einer Telekommunikationsleitung im Zusammenhang steht, das einem Cluster zugeordnete Gewicht bestimmt wird durch:

- Bestimmen von Abständen zwischen der Position des Clusters und einer erwarteten Position über Dimensionen des Merkmalsraumes, die der Stabilität zugeordnet sind,
- Bestimmen eines minimalen Abstands unter den Abständen,
- Bestimmen des Gewichts in Abhängigkeit von dem minimalen Abstand; je größer der minimale Abstand, desto kleiner das Gewicht.

7. Verfahren nach einem der Ansprüche 1 bis 6, welches das Bestimmen (T3) einer Quality of Experience einer Telekommunikationsleitung und/oder das Vorhersagen, dass sich ein Benutzer einer Telekommunikationsleitung beschweren wird, unter Verwendung des trainierten Maschinenlernmodells umfasst.

8. Verfahren nach Anspruch 7, welches das Durchführen (T4) einer Korrekturmaßnahme für das Telekommunikationsnetz (1) in Reaktion auf das Bestimmen einer niedrigen QoE oder das Vorhersagen einer Benutzerbeschwerde umfasst.

9. Computerprogramm (P), welches Anweisungen zum Durchführen des Verfahrens nach einem der Ansprüche 1 bis 8, wenn die Anweisungen von einem Computer ausgeführt werden, umfasst.

10. Überwachungsvorrichtung (5) zum Überwachen eines Telekommunikationsnetzes (1), das wenigstens einen Zugangsknoten (2), mehrere Client-Vorrichtungen (3) und mehrere Telekommunikationsleitungen (4), die den wenigstens einen Zugangsknoten (2) mit jeweiligen Client-Vorrichtungen (3) verbinden, umfasst, wobei die Überwachungsvorrichtung (5) Mittel (6, 7, P) umfasst, die ausgelegt sind zum:

- Bestimmen (S2) einer Trainingsmenge, die dem Telekommunikationsnetz (1) zugeordnet ist, wobei die Trainingsmenge mehrere Trainingsbeispiele beinhaltet, wobei ein Trainingsbeispiel angibt:

- Merkmale, die mit der Funktionsweise einer Telekommunikationsleitung (4) im Zusammenhang stehen, und
- ein Etikett,

- für wenigstens ein solches Etikett:

- Clustern (S3) der Trainingsbeispiele, die dem Etikett zugeordnet sind, dadurch Bestimmen mehrerer Cluster, die dem Etikett zugeordnet sind,
- Bestimmen (S4) von Gewichten, die den jeweiligen Clustern zugeordnet werden, wobei das einem Cluster zugeordnete Gewicht als eine Funktion einer Position des Clusters in einem Merkmalsraum und als eine Funktion des Etiketts bestimmt wird, und
- Neuberechnen (S5) der Cluster gemäß den Gewichten, dadurch Bestimmen neuberechneter Cluster,

- Bestimmen (S6) einer neuberechneten Trainingsmenge gemäß den neuberechneten Clustern,
- Trainieren (S7) eines Maschinenlernmodells gemäß der neuberechneten Trainingsmenge, dadurch Bestimmen eines trainierten Maschinenlernmodells, das dafür ausgelegt ist, ein Etikett in Abhängigkeit von Betriebsdaten zu bestimmen oder vorherzusagen, die mit der Funktionsweise einer Telekommunikationsleitung im Zusammenhang stehen.

**Revendications**

1. Procédé de surveillance d'un réseau de télécommunication (1) comprenant au moins un nœud d'accès (2), une pluralité de dispositifs clients (3), et une pluralité de lignes de télécommunication (4) connectant ledit au moins un nœud d'accès (2) à des dispositifs clients respectifs (3), le procédé étant mis en œuvre par un dispositif de surveillance (5), le procédé comprenant les étapes suivantes :

- déterminer (S2) un ensemble d'entraînement associé au réseau de télécommunication (1), ledit ensemble d'entraînement comprenant une pluralité d'exemples d'entraînement, un exemple d'entraînement spécifiant :

- des éléments caractéristiques liés au fonctionnement d'une ligne de télécommunication (4), et
- une étiquette,

- pour au moins l'une desdites étiquettes :

- regrouper (S3) les exemples d'entraînement associés à ladite étiquette, pour ainsi déterminer une pluralité de groupements associés à ladite étiquette,
- déterminer (S4) des poids associés aux groupements respectifs, dans lequel le poids associé à un groupement est déterminé en fonction d'une position dudit groupement dans un espace d'éléments caractéristiques et en fonction de ladite étiquette, et
- rééchantillonner (S5) lesdits groupements selon lesdits poids, pour ainsi déterminer des groupements rééchantillonnés,
- déterminer (S6) un ensemble d'entraînement rééchantillonné selon lesdits groupements rééchantillonnés,
- entraîner (S7) un modèle d'apprentissage automatique selon ledit ensemble d'entraînement rééchantillonné, pour ainsi déterminer un modèle d'apprentissage automatique entraîné conçu pour déterminer ou prédire une étiquette en fonction de données de fonctionnement liées au fonctionnement d'une ligne de télécommunication.

2. Procédé selon la revendication 1, dans lequel un exemple d'entraînement spécifie un ou plusieurs éléments caractéristiques liés à une vitesse de la ligne de télécommunication et/ou un ou plusieurs éléments caractéristiques liés à une stabilité d'une ligne de télécommunication.

3. Procédé selon l'une des revendications 1 à 2, comprenant la réception (S1) de données de tickets spécifiant des plaintes reçues par un service client associé audit réseau de télécommunication (1), dans lequel l'étiquette d'un exemple d'entraînement spécifie la présence et/ou le type d'une plainte.

4. Procédé selon l'une des revendications 1 à 3, dans lequel, pour une étiquette spécifiant une absence de plainte, le poids associé à un groupement est déterminé par :

- la détermination de distances entre la position dudit groupement et une position attendue, pour toutes les dimensions dudit espace d'éléments caractéristiques,
- la détermination d'une distance maximale parmi lesdites distances,
- la détermination dudit poids en fonction de ladite distance maximale, le poids étant d'autant plus faible que la distance maximale est élevée.

5. Procédé selon l'une des revendications 1 à 4, dans lequel, pour une étiquette spécifiant une plainte liée à une vitesse d'une ligne de télécommunication, le poids associé à un groupement est déterminé par :

- la détermination de distances entre la position dudit groupement et une position attendue, pour toutes les dimensions dudit espace d'éléments caractéristiques associé à la vitesse,
- la détermination d'une distance minimale parmi lesdites distances,
- la détermination dudit poids en fonction de ladite distance minimale, le poids étant d'autant plus faible que la distance minimale est élevée.

6. Procédé selon l'une des revendications 1 à 5, dans lequel, pour une étiquette spécifiant une plainte liée à une stabilité d'une ligne de télécommunication, le poids associé à un groupement est déterminé par :

- la détermination de distances entre la position dudit groupement et une position attendue, pour toutes les dimensions dudit espace d'éléments caractéristiques associé à la stabilité,
- la détermination d'une distance minimale parmi lesdites distances,
- la détermination dudit poids en fonction de ladite distance minimale, le poids étant d'autant plus faible que la distance minimale est élevée.

7. Procédé selon l'une des revendications 1 à 6, comprenant la détermination (T3) d'une Qualité d'Expérience (QoE : "Quality of Experience") d'une ligne de télécommunication et/ou la prédiction qu'un utilisateur d'une ligne de télécommunication se plaindra, en utilisant le modèle d'apprentissage automatique entraîné.

8. Procédé selon la revendication 7, comprenant l'exécution (T4) d'une action de correction pour le réseau de télécommunication (1) en réponse à la détermination d'une faible QoE ou à la prédiction d'une plainte d'un utilisateur.

9. Programme informatique (P) comprenant des instructions permettant de mettre en œuvre le procédé selon l'une des revendications 1 à 8 lorsque lesdites instructions sont exécutées par un ordinateur.

10. Dispositif de surveillance (5) destiné à surveiller un réseau de télécommunication (1) comprenant au moins un nœud d'accès (2), une pluralité de dispositifs clients (3), et une pluralité de lignes de télécommunication (4) connectant ledit au moins un nœud d'accès (2) à des dispositifs clients (3) respectifs, le dispositif de surveillance (5) comprenant des moyens (6, 7, P) conçus pour :

- déterminer (S2) un ensemble d'entraînement associé au réseau de télécommunication (1), ledit ensemble d'entraînement comprenant une pluralité d'exemples d'entraînement, un exemple d'entraînement spécifiant :

- des éléments caractéristiques liés au fonctionnement d'une ligne de télécommunication (4), et
- une étiquette,
- pour au moins l'une desdites étiquettes :

- regrouper (S3) les exemples d'entraînement associés à ladite étiquette, pour ainsi déterminer une pluralité de groupements associés à ladite étiquette,
- déterminer (S4) des poids associés aux groupements respectifs, dans lequel le poids associé à un groupement est déterminé en fonction d'une position dudit groupement dans un espace d'éléments caractéristiques et en fonction de ladite étiquette,
- rééchantillonner (S5) lesdits groupements selon lesdits poids, pour ainsi déterminer des groupements rééchantillonnés,
- déterminer (S6) un ensemble d'entraînement rééchantillonné selon lesdits groupements rééchantillonnés,
- entraîner (S7) un modèle d'apprentissage automatique selon ledit ensemble d'entraînement rééchantillonné, pour ainsi déterminer un modèle d'apprentissage automatique entraîné conçu pour déterminer ou prédire une étiquette en fonction de données de fonctionnement liées au fonctionnement d'une ligne de télécommunication.

FIG. 1

Obtain Operational Data and Ticketing Data ~S1

Determine Training Set ~S2

Clustering ~S3

Determine Weights ~S4

Clusters Resampling ~S5

Determine Resampled Training Set ~S6

Train Model ~S7

FIG. 2

Obtain Operational Data ~T1

Determine Input Example ~T2

Classify ~T3

Corrective Action ~T4

FIG. 3

6    P    ~7

FIG. 5

FIG. 4

Legend:
- ● No Ticket
- ✕ Low speed Ticket
- ■ Drop connection Ticket

Axis labels: Stability (vertical), Speed (horizontal)

Reference numerals: 8

EP 3 454 506 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9152925 B2

- US 2014310396 A1

**Non-patent literature cited in the description**

- **KARAN MITRA et al.** *Proactive QoE Provisionning in Heterogeneous Access Networks using Hidden Markov Models and Reinforcement Learning*